(19) Europäisches Patentamt
European Patent Office
Office européen des brevets

(11) **EP 2 183 602 B1**

(12) **EUROPEAN PATENT SPECIFICATION**

(45) Date of publication and mention
of the grant of the patent:
**12.08.2015 Bulletin 2015/33**

(21) Application number: **08785537.5**

(22) Date of filing: **13.08.2008**

(51) Int Cl.:
$G01P\ 5/22\ ^{(2006.01)}$    $G01P\ 5/26\ ^{(2006.01)}$
$G01F\ 1/708\ ^{(2006.01)}$    $G01F\ 1/712\ ^{(2006.01)}$

(86) International application number:
**PCT/EP2008/006671**

(87) International publication number:
**WO 2009/021732 (19.02.2009 Gazette 2009/08)**

(54) **METHOD FOR DETERMINING THE FLOW OF A FLUID CLOSE TO A SURFACE OF AN OBJECT IMMERSED IN THE FLUID**

VERFAHREN ZUR BESTIMMUNG DER STRÖMUNG EINES FLUIDS IN DER NÄHE EINER OBERFLÄCHE EINES IN DAS FLUID EINGETAUCHTEN OBJEKTS

PROCÉDÉ POUR DÉTERMINER L'ÉCOULEMENT D'UN LIQUIDE PROCHE D'UNE SURFACE D'UN OBJET IMMERGÉ DANS LE LIQUIDE

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **14.08.2007 US 935454 P**

(43) Date of publication of application:
**12.05.2010 Bulletin 2010/19**

(73) Proprietor: **Rigler, Rudolf**
**1015 St. Sulpice (CH)**

(72) Inventor: **Rigler, Rudolf**
**1015 St. Sulpice (CH)**

(74) Representative: **Weickmann & Weickmann**
**Postfach 860 820**
**81635 München (DE)**

(56) References cited:
**DE-C1- 19 718 917    JP-A- 60 235 068**
**US-A- 3 472 593    US-A- 5 859 694**

• **JOSEPH R. LAKOWICZ: "Principles of Fluorescence Spectroscopy" 2006, SPRINGER SCIENCE+BUSINESS MEDIA, LLC , XP002516227 ISBN: 0-387-31278-1 Retrieved from the Internet: URL:http: //www.springerlink.com/content/q7 56x15118188858/fulltext.pdf> [retrieved on 2009-02-19] page 797 - page 832**
• **GOESCH M ET AL: "HYDRODYNAMIC FLOW PROFILING IN MICROCHANNEL STRUCTURES BY SINGLE MOLECULE FLUORESCENCE CORRELATION SPECTROSCOPY" ANALYTICAL CHEMISTRY, AMERICAN CHEMICAL SOCIETY. COLUMBUS, US, vol. 72, no. 14, 15 July 2000 (2000-07-15), pages 3260-3265, XP002180726 ISSN: 0003-2700 cited in the application**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The analysis of laminar and turbulent aerodynamic flow around objects of different size and shape usually involves seeding and laser velocimetry. This technology is well developed and constitutes a widely used standard.

Many properties known from airplane design like wings and rudder etc. have their counterpart in boat building i.e the keel can be envisaged as a wing turned by 90 degrees and basic properties can be transferred from aerodynamics to nautical design including analysis of laminar and turbulent flow. In principle seeding and laser velocimetry are possible also in the aqueous phase however fluctuations in densities and refractive index of water will set a limit. Contrary to the analysis of the real size object (airplane) the corresponding case in aqueous phase (ship) is extremely demanding and costly.

This invention proposes a method which is able to follow laminar flow of aqueous phases and their change into a turbulent regime close to the surface of immersed objects. It is based on the detection of fluorescent particles normally found in seawater and the correlation of their intensities in time and space.

The concept is based on a technology developed at the Karolinska Institutet by Rigler and collaborators which enables the analysis of molecules and particles emitting photons (Fluorescence Correlation Spectroscopy, FCS, Rigler and Elson, 2000).The basic concept is to follow the photon emission of particles in a small volume element of light which excites the particles (molecules) to fluorescence. The flow of particles will cause fluctuations of the emitted light which are correlated in time and space.

The measurement of flow velocities with single point illumination has been described in solutions (Magde et al.1977), as well as for micro channels (Gösch et al. 2000).With the development of confocal epi illumination (Rigler et al.1993) ultimate sensitivity was reached and the flow of single molecules in microchannels was performed (Gösch et al.2000).

It is known how to measure the flow of a fluid surrounding an object immersed in the fluid, e.g. a boat in water driven by at least one propeller which is arranged on the outside of the boat in the water. The arrangement involves laser Doppler or acoustic Doppler analysis. In this respect the flow is accomplished by the movement of the driven boat relative to the water and the flow measurement is intended to determine the velocity of the moving boat. Velocity measurements with a propeller leads to a loss of velocity of the boat, as the propeller produces additional resistance in the water outside of an optimal streamline form. Laser and acoustic Doppler analysis are rather costly. DE 197 18 917 and US 3 472 593 show examples of such devices.

Therefore, it is the object of the invention to find a method which allows to determine the flow along an immersed object, in particular for optimizing the streamline form and skin of the object and furthermore for determining the velocity of the object relative to the fluid.

According to the invention there is proposed a method for determining the flow of a fluid close to a surface of an object immersed in the fluid by analyzing at least one confocal measurement volume in the fluid, comprising the steps of:

> focusing light into the at least one confocal volume within the fluid;
> detecting and determining of at least one optical parameter of at least one particle comprised in the confocal volume; and
> determining the flow velocity of the fluid based on the determination of the at least one optical parameter using a correlation function, in particular an auto correlation function or a cross correlation function.

The optical parameter is the luminescence of at least one particle in the confocal volume, which is measured by Fluorescence Correlation Spectroscopy FCS, wherein the following steps are comprised:

> exciting the at least one luminescent particle in the at least one confocal volume, imaging the confocal volume on detecting means for detecting the intensity fluctuation of luminescent emission of the particle,
> recording of the luminescent intensity by the detecting means, determining the flow velocity based on a correlation function, in particular an auto correlation function or a cross correlation function, depending from the recorded luminescent intensity.

Alternatively the optical parameter may be the reflexion of at least one particle in the confocal volume, wherein the following steps are comprised:

> irradiating the at least one particle in the at least one confocal volume,
> imaging the confocal volume on detecting means for detecting the reflexion intensity of reflected light from of the particle,
> recording of the reflexion intensity by the detecting means,
> determining the flow velocity based on a correlation function, in particular an auto correlation function or a cross correlation function, depending from the recorded reflexion intensity.

Preferably the flow and its direction are evaluated from correlated luminescence intensities emitted by at least one particle in each of two adjacent confocal volumes.

It is proposed that the flow and its direction are evaluated from correlated reflexion intensities emitted by at least one particle in each of two adjacent confocal volumes.

Alternatively the flow and its direction are evaluated from correlated scattering intensities emitted by at least one particle in each of two adjacent confocal volumes.

A distance between the adjacent confocal volumes is preferably chosen depending on the velocity range of interest, the distance being from about 100μm to about 10000μm.

The at least one particle may be naturally contained in and/or man-made put into the fluid.

Preferably the immersed object is a boat and the surface comprises immersed parts of this boat, in particular its hull, keel or rudder.

Preferably the method is carried out in a fluid which is seawater or freshwater or brackish water.

Preferably the determination of the flow velocity is based on one confocal volume for a desired velocity range up to 0,1 m/s.

For a higher velocity the determination of the flow velocity is based on two adjacent confocal volumes for a desired velocity range from >0,1 m/s to 50 m/s.

For carrying out the proposed measurements it is preferred that the particles are organic particles, in particular plankton and/or algae or derivatives of algae and/or pigments, or inorganic particles. These particles can be found naturally in the fluid, in particular in sea water.

Preferably the confocal volumes have a size in the range of 10-15 (Femto) to 10-9 (Nano) liters.

In order to be able to measure the flow close to the immersed surface of the object, it is proposed that a distance between a confocal volume and the surface of the immersed object is chosen in the range from zero to few centimeters.

Furthermore the determined flow may be used to determine the velocity of the immersed object, when the immersed object is propelled within the fluid by an additional force, in particular wind force and/or motor force. In this respect it has to be mentioned, that the flow close to the immersed surface of the object is a result of a relative movement between the object and the surrounding fluid, in particular between the boat and the sea water.

The light which is focused on the at least one confocal volume is preferably a laser light.

The proposed method gives the possibility to systematically examine the flow of fluid around an object immersed in this fluid. From the determination results there can be derived detailed information about laminar or turbulent flow characteristics or about cavitation along the surface of the object, especially in a range very close to this surface. Furthermore, this method can be used for determining the velocity of the object itself relative to the surrounding fluid.

Assuming that the particles are man-made put into the fluid, e.g. the sea, it is possible to track the distribution of these particles over long distances and long time, which leads to the possibility to determine the flow in a wide sea area, e.g. the Baltic sea, the Mediterranean. This enables to calculate flow models of the sea and to derive flow maps for certain sea areas. The man-made particles comprise preferably a combination of at least two particles emitting different colors, which can then be determined by dual color cross correlation or by higher order cross correlation in case of multicolor particles. If the particles are made from at least two particles with know different luminescences, these particles can be found and determined easily in the fluid, even if the particles have traveled a great distance within the fluid. This sort of particles is especially suitable for the determination of flow characteristics in a greater sea area, as described above.

According to another aspect, there is proposed an object, preferably boat, immersed in a fluid and comprising a measurement device for carrying out the method according to the invention, wherein the device comprises:

at least one light source, preferably laser light source, which delivers a light beam for irradiation of at least one confocal volume;
at least one lens arrangement for defining the confocal volume in the fluid; and
at least one lens arrangement for imaging the confocal volume to a photo detector, preferably photo diode.

Preferably the lens arrangement for defining the confocal volume and the lens arrangement for imaging are configured by the same lens or the same lenses. The two lens arrangements are then in fact one single lens arrangement, which is used for focusing as well as for imaging the confocal volume.

The measurement device may comprising at least one first glass fiber cable segment, which is arranged in the optical path between the light source and the lens arrangement for defining the confocal volume.

The at least one first glass fiber cable segment may be further optically connected to the lens arrangement for imaging the confocal volume, in particular for collecting the emission or reflection or scattering from the confocal volume.

Preferably the measurement device comprises at least one second glass fiber cable segment, which is arranged in the optical path from the lens arrangement to the photo detector.

The measurement device may further comprise a dichroic beam splitter, which is arranged between the lens arrangement and the light source and between the lens arrangement and the photo detector.

It is proposed that the first glass fiber cable segment is optically connected between the dichroic beam splitter and the lens arrangement, and the second glass fiber cable segment is optically connected between the dichroic beam splitter and the photo diode.

Preferably the photo detector is an avalanche photo diode.

For the determination of the flow and its direction it is proposed that the device comprises two lens arrangements for defining two confocal volumes in the fluid and two lens arrangements for imaging both confocal volumes to a photo detector.

Preferably the device is mounted on the immersed object, preferably a boat.

In order to be able to define the confocal volume in the fluid, the at least one lens arrangement for defining the confocal volume in the fluid is arranged on or in the surface of the immersed object such that the confocal volume can be produced close to the immersed surface of the object. This can be achieved for example by a small opening in the surface of the object, in which a lens of the lens arrangement is inserted.

Further details of the invention will be described in the following text and figures. There is described a preferred embodiment using Fluorescence Correlations Spectroscopy (FCS) for carrying out the method according to the invention.

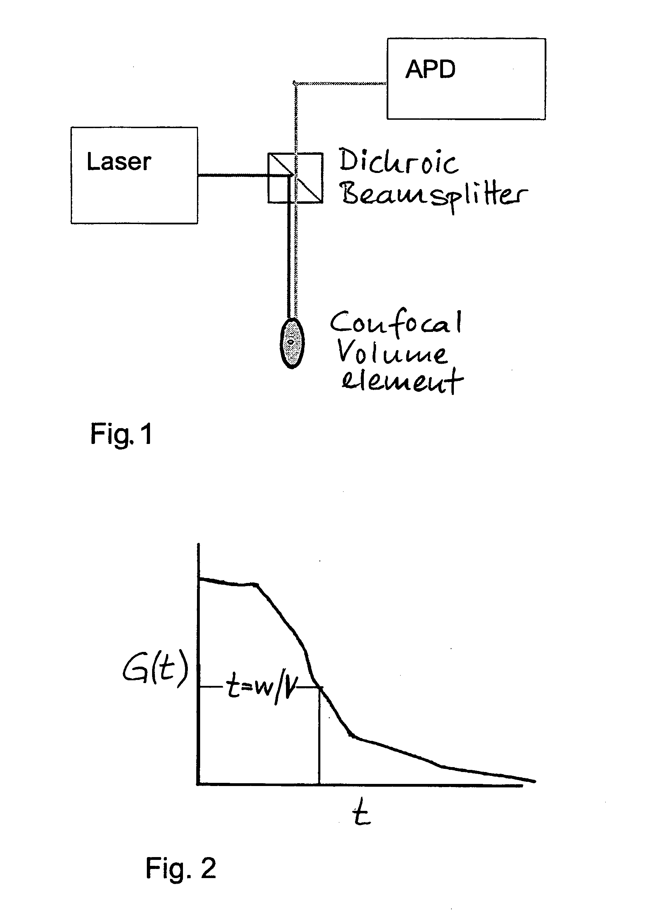

Fig.1 shows in a schematic way the arrangement for the irradiation of one confocal volume in the fluid, i.e. a setup for single point illumination with laserdiode and avalanche photo diode (APD)

From the intensity fluctuations as observed by a single photon detector the flow velocities can be determined from the autocorrelation function G(t).

The correlation function is related to the fluctuation intensity I(t) by:

$$G_1(\tau) = \frac{<I(t)I(t+\tau)>}{I^2} \qquad (1)$$

$$G_1(\tau) = \frac{1}{N}\frac{1}{1+\dfrac{\tau}{\tau_D}}\exp-\left(\frac{V^2\tau^2}{\omega^2}\frac{1}{1+\dfrac{\tau}{\tau_D}}\right) \qquad (2)$$

Here:

1/N= number of particles in confocal volume element
V= flow velocity
$\omega$= radius of confocal element
$\tau_D$= diffusion time

For a radius w of $1\mu$m and a velocity V of 1 m/s = $1\mu$m/$1\mu$s the characteristic flow time is

$$\tau_{flow} = \omega/V = 1\ \mu s$$

Fig. 2 shows the autocorrelation of flow velocity.

With decreasing flow velocity the diffusion processes as characterised by the diffusion time $\tau_D$ will dominate the correlation function. The diffusion time $\tau_D = \omega^2/4D$ (D= diffusion constant [6 x $10^{-6}$ cm$^2$/s for a dye molecule] and with $\omega$= 1 $\mu$m $\tau_D$ is ca 200 $\mu$s which is orders of magnitude lower than the flow time.

The flow speed as well as its direction can be evaluated from the correlated fluorescence intensities emitted by particles in two adjacent points of illuminations. In this case the probability of a particle being at point 2 is compared with its probability of being in point 1 which is related to the time the particles takes to travel from point 1 to point 2.

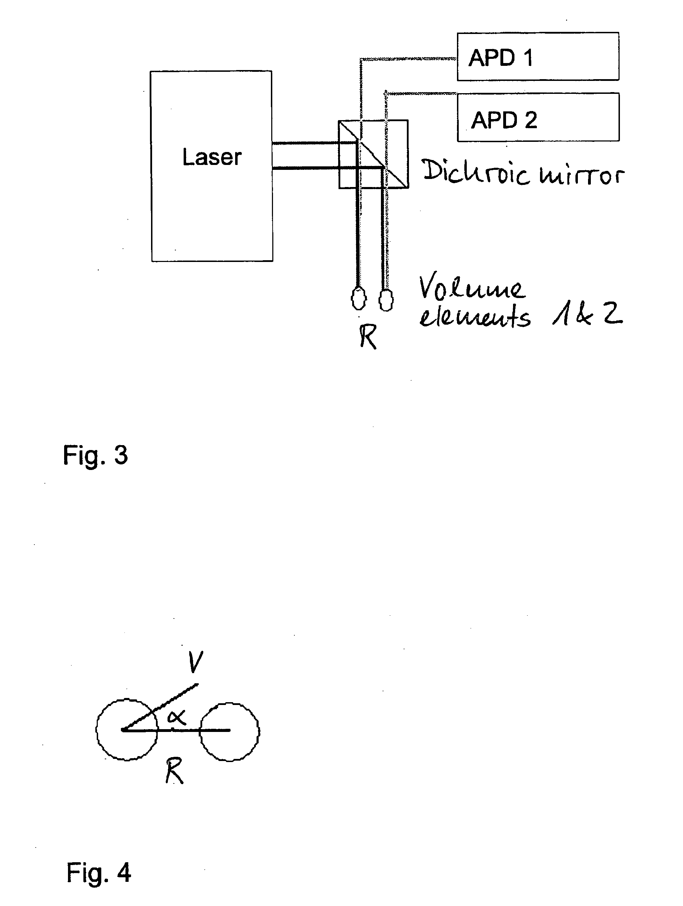

The setup contains 2 excitation points excited with the laser diode and the emission is detected from the 2 excitation points (Fig 3). Fig 3 shows a set up for two spot excitation and detection by 2 APDs.

For this case the correlation function $G_2(t)$ is given:

$$G_2(\tau) = \frac{<I_1(t)I_2(t+\tau)>}{I_1 I_2} \qquad (3)$$

and

$$G_2(\tau) = 1 + \frac{1}{N}\exp-\left(\frac{(V\tau - R)^2}{\omega^2}\right) \qquad (4)$$

As can be seen R is the distance between the excitation points and V the H velocity along the direction of R. If R goes to zero both points superimpose and equation (4) collapses to equation (2).

Most importantly the component of V at the angle $\alpha$ to the direction of R can be calculated according to Brinkmeier (1996) and Brinkmeier and Rigler (1995):

$$G_2(\tau) = 1 + \frac{1}{N}\exp-\frac{R^2}{\omega^2}\left(\frac{\tau^2}{\tau_F^2} + 1 - 2\frac{\tau}{\tau_F}\cos\alpha\right) \qquad (5)$$

With

$\tau_F$ = RN flow time over interfocal distance
$\alpha$ = angle between V and R (see Fig. 4)

As can be seen from equation (4) $G_2(\tau)$ goes through a maximum which is positioned in relation to the distance R. Basically from the position of the maximum on the time axis and the amplitude of $G_2(\tau)$ the value of V and the angle $\alpha$ can be estimated.

The speeds of interest will be between 0.1 to 50 m/s correspondent to about 0.2 to 100 knots. While at slow speeds single spot measurements are preferable (With a focal radius of 1 $\mu$m at a speed 0.1 m/s the flowtime $\tau_F$ = 10 $\mu$s) while for high speeds the 2 focal measurement will be preferable. Depending on the velocity range of interest the interfocal distance R is chosen. With a distance R of 100 $\mu$m at V of 10 m/s a characteristic flow time $\tau_F$ = RN of 10 $\mu$s is obtained. At this time (10 $\mu$s) the peak of $G_2(\tau)$ will be observed. The width of the Gaussian will depend on the ratio R/$\omega$.

**Table 1**

| Characteristic flow time for 1 and 2 spot measurements and different flow velocities. | | | | |
|---|---|---|---|---|
| Measurement | Velocity[m/s] | R [$\mu$m] | w [$\mu$m] | Flowtime [$\mu$s] |
| Single spot | 0.1 | | 1 | 10 |
| Two spot | 10 | 100 | 1 | 10 |
| | 10 | 200 | 1 | 20 |
| | 20 | 200 | 1 | 10 |
| | 20 | 2000 | 1 | 100 |

In order to test the feasibility of this approach there were carried out single spot measurements in tap water as well as in sea water.

It was first discovered that Stockholm tap water contained measurable contamination of molecules/particles emitting in the red when excitation with a Neon laser (633 nm) was used. Similarly contaminants emitting in the green were found when excitation with an Argon laser (488 nm) was used.

The fluorescence signal of tap water was measured both in a flow setup and on a droplet in a Zeiss-Confocor 2 (FCS spectrometer). The aim was to study whether tap water contains fluorescence molecules that can be used for monitoring flow velocity in a future project. The result shows that tap water is contaminated with both red and green fluorescence molecules. In the graph beneath the $G_1(\tau)$ is shown for tap water together with the trace of the fluctuating signal of the streaming tap water. As is visible from the graph red emitting contamination with a flowtime of 49 $\mu$s and a concentration of about ca 3 $10^{-8}$M was detected. As comparison double distilled and membrane filtered water was used and no correlation could be detected.

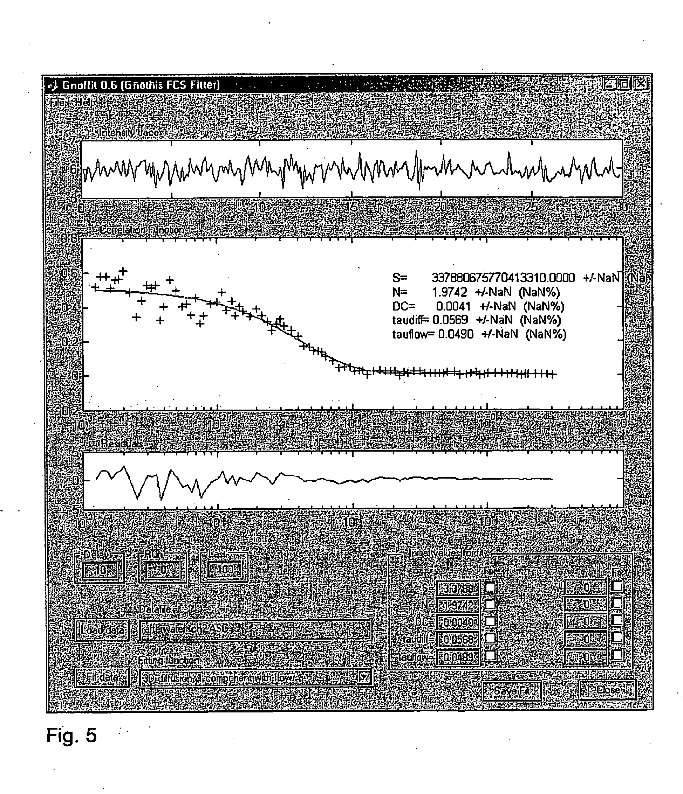

Fig. 5 shows FCS measurement and $G_1(\tau)$ of tap water in flow. Correlation is visible, which indicates presence of fluorescence particles in the water.

The existence of measurable molecules is demonstrated in fig 5 where the signal of individual contaminating molecules is shown

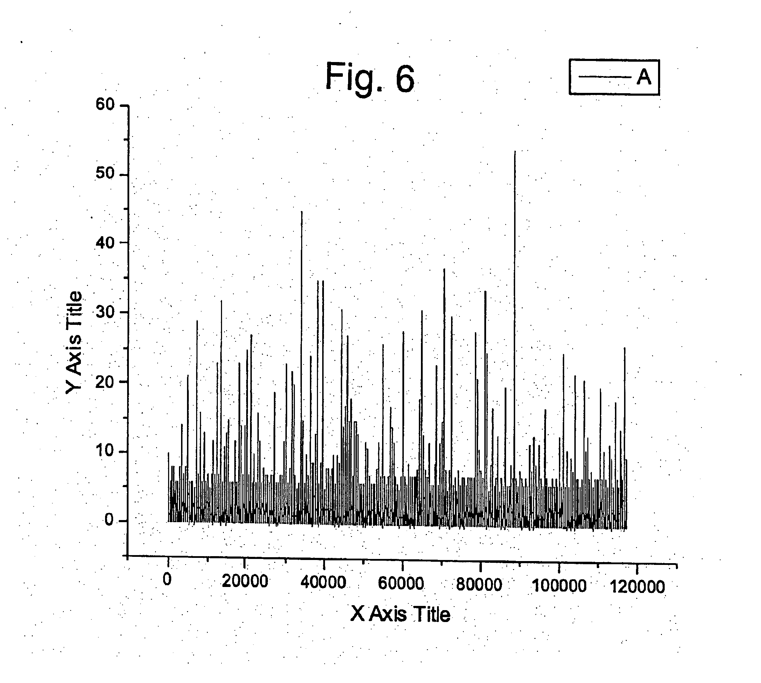

Fig. 6 shows an intensity trace of tap water in flow. Data shows presence of many fluorescence molecule peaks.

The distilled water showed a much reduced contamination (fig.6)

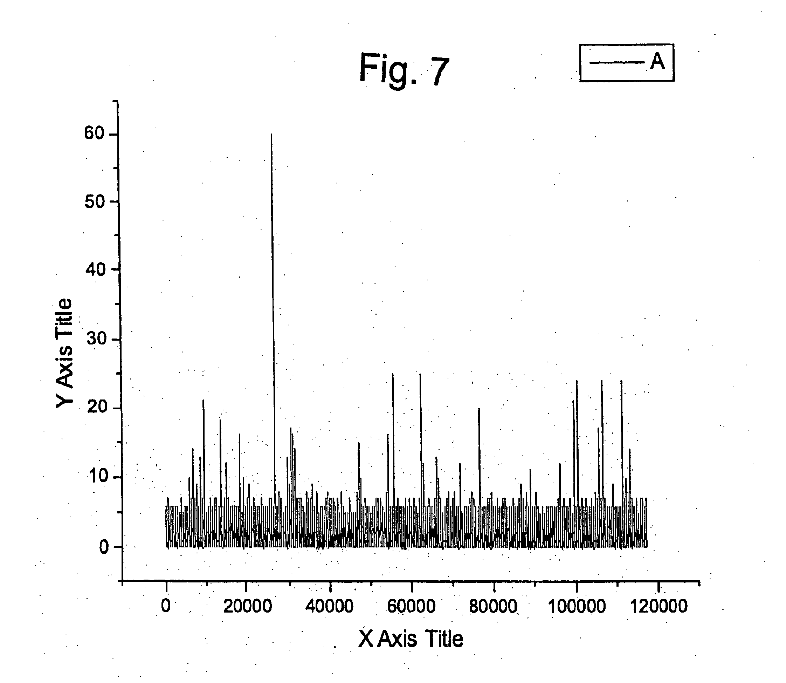

Fig. 7 shows an intensity trace of buffer in flow before tap water is introduced into the system. A few fluorescence molecule peaks are visible.

Fluorescence signal in sea water

The red fluorescence signal of seawater from three different places in the Stockholm archipelago was measured in a flow setup and on a "lying" droplet. The aim was to study whether seawater contains fluorescence molecules that can be used for flow velocity measurements in a future project. The result shows that seawater is very contaminated with red fluorescence molecules. Green signal was not evaluated here. Data from Confocor2 measurements are available but not evaluated.

Sea water was collected at Sandhamn brygga, Rosattra brygga and Sandhamn Trouville.

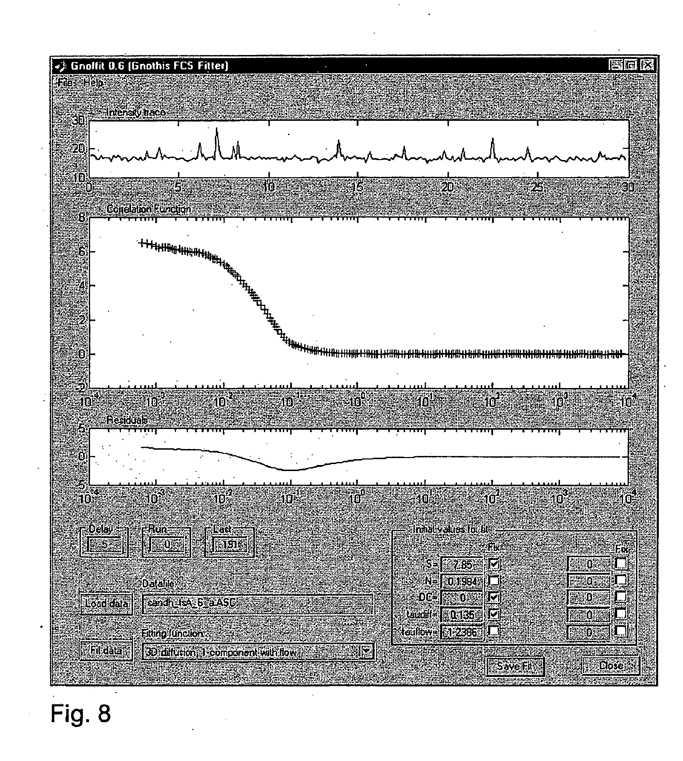

Fig. 8 shows FCS measurement and $G_1(\tau)$ of seawater in 6 l/min flow. Correlation is visible, which indicates presence of fluorescence particles in the water.

Table 2

| Concentration of fluorescent particles excited at 633 nm and emitting above 680 nm | | |
|---|---|---|
| Position of sea water samples taken | Number of contaminants in volume element of observation | Concentration of fluorescent contaminants [nM] |
| Sandhamns brygga | 2.7 | 40.5 |
| Sandhamn Trouville | 3.6 | 54 |
| Rosättra brygga | 3.2 | 48 |
| Tap water | 0.5 | 7.5 |
| Distilled water | 0.06 | 0.93 |

The conclusion from this observation is that a heavy contamination by fluorescent molecules exist at least in the Baltic sea. It is assumed that the contamination in the Mediterrean sea is at least of the same magnitude as the Baltic sea.

**Construction of the one spot and two spot measurement setup for hydrodynamic analysis**

The setup, which is preferably used, consists of a single mode or multimode glasfiber coupled to a red diode laser (pigtail laser diode) which delivers the exitation radiation to the excitation spot. From the excitation spot the emission will be collected from the same cable and will be transmitted to a glasfiber linked avalanche photo diode (APD). Introducing a dichroic beam splitter separates excitation intensity from the emitted intensity which is transferred to the detectors (see fig.1). The volume element defined by a focal lens at the end of the glasfiber cable will lie close to the fiber end.

The double illumination setup uses one diode laser but 2 APDs as seen in Fig.2.

**Boatspeed vs laminar and turbulent flow**

The fiber based setup ensures transmission of laser excitation and detection of emitted radiation over long distances > 10 m and lends itself to the construction of multiple measuring points which can be freely chosen on the ship's hull, keel and rudder.

In order to obtain a high boat speed, laminar flow around the immersed parts of the boat is required and turbulence and cavitation is to be avoided as much as possible.

It was observed in laminar flow in microchannels (Goesch et al. 2000) that the flow exhibits a parabolic flow profile with flow velocity close to zero at the microchannel wall and with a maximum in the middle of the channel.

The nearest water layers stick to the hull surface with zero velocity and following layers will flow in relation to the boat speed. An important application of the proposed method is to find out where the laminar flow profile will turn into turbulent flow and even cavitation. This occurs for example in the back part of the hull and in particular at the rudder at certain steering angles.

**Test of boat models in tanks with streaming water**

In order to test the proposed method a test system includes ship models with laser, fiber guides, detectors and power supplies mounted atop. The data is transmitted to computer outside of the tank.

The main task is to test the principle behaviour of one spot and two spot detection as a function of flow speed in various layers around the model. Another task is to characterize the transition from laminar to turbulent flow. The measuring points are arranged such that the measuring focus can be placed in different water layers around the model by translation of the detection focus orthogonal to the surface.

A) Test of flow speed, laminar and turbulent flow with a mock up rudder mounted on a boat hull

The measuring system containing measuring points on either side of the mock up rudder is set up in a way that lasers and detectors as well as the data analysis is placed in the boat hull. Analysis is carried out in sea water as a function of boat speed and boat performance on tack and down wind.

The mock up rudder is constructed such that the measuring point can be positioned at various locations on the rudder surface

B) Test of laminar and turbulent flow at the keel bulb

The equipment is used to test strategic points at the keel bulb and the winglets respectively. The detection /measuring points are placed at chosen points connecting the laser source, detectors and data analysis in the boat.

C) Test of multiple point measuring equipment at places selected from previous tests (rudder)

This test develops the ultimate position of the measuring points at the rudder as well as software and indicators for the boat crew when unfavourable conditions in terms of boat speed and hydrodynamic behaviour are emerging. The indicators should also contain instructions for improving and optimizing the boat behaviour.

References

Magde,D,Elson,W.&Webb.W.W.(1977). Flow analysis by FCS. Biopolymers

Rigler,R, Mets,U.,Widengren,J. & Kask,P.(1993): Fluorescence correlation spectroscopy with high count rate and low background: Analysis of translational diffusion. Eur. Biophys J, 22:169-175.

Brinkmeier,M and Rigler,R,(1995) Flow Analysis by means of Fluorescence Correlation Spectroscopy.Exp.Techn.Phys.41,205-210

Brinkmeier,M.(1996) Fluoreszenz Korrelations Spektrosokopie in Mikrostrukturen. Dissertation Universität Braunschweig

Rigler,R.and Elson,E.(2000) Fluorescence Correlation Spectroscopy.Theory and Application. Springer-Verlag Heidelberg

Gösch,M., Blom, H., Holm, J. Heino, T.& Rigler,R.(2000) Hydrodynamic Flow Profiling in Microchannel structures by Single Molecule Fluorescence Correlation Spectroscopy.Anal.Chem. 72.3260-3265

**Claims**

1. Method for determining the flow of water, in particular seawater or freshwater or brackwater, close to a surface of an object immersed in the water **characterized by** analyzing at least one confocal measurement volume in the water and by comprising the steps of:

   focusing light into the at least one confocal volume within the water;
   detecting and determining the luminescence of at least one particle comprised in the confocal volume, which is measured by Fluorescence Correlation Spectroscopy FCS; and
   determining the flow velocity of the water along the object immersed in water, preferably along parts of a boat, in particular its hull, keel or rudder, based on the determination of the luminescence using a correlation function, in particular an auto correlation function or a cross correlation function.

2. Method according to claim 1, wherein the following steps are comprised:

   exciting the at least one luminescent particle in the at least one confocal volume, imaging the confocal volume on detecting means for detecting the intensity fluctuation of luminescent emission of the particle,
   recording of the luminescent intensity by the detecting means, determining the flow velocity based on a correlation function, in particular an auto correlation function or a cross correlation function, depending from the recorded luminescent intensity.

3. Method for determining the flow of water, in particular seawater or freshwater or brackwater, close to a surface of an object immersed in the water **characterized by** analyzing at least one confocal measurement volume in the water and by comprising the steps of:

   focusing light into the at least one confocal volume within the water;
   detecting and determining the reflexion of at least one particle in the confocal volume, wherein the following steps are comprised:

      irradiating the at least one particle in the at least one confocal volume, imaging the confocal volume on detecting means for detecting the reflexion intensity of reflected light from of the particle,
      recording of the reflexion intensity by the detecting means, determining the flow velocity of the water along the object immersed in water, preferably along parts of a boat, in particular its hull, keel or rudder, based on a correlation function, in particular an auto correlation function or a cross correlation function, depending from the recorded reflexion intensity.

4. Method according to claim 1 or 2, wherein the flow and its direction are evaluated from correlated luminescence intensities emitted by at least one particle in each of two adjacent confocal volumes.

5. Method according to claim 3, wherein the flow and its direction are evaluated from correlated reflexion intensities emitted by at least one particle in each of two adjacent confocal volumes.

6. Method according to claim 4 or 5, wherein a distance between the adjacent confocal volumes is chosen depending on the velocity range of interest, the distance being from about 100$\mu$m to about 10000$\mu$m.

7. Method according to any of the preceding claims, wherein the at least one particle is naturally contained in and/or man-made put into the water, wherein preferably the man-made particle comprises a combination of at least two particles emitting different colors, and wherein preferably the flow is determined by dual color cross correlation or by higher order cross correlation.

8. Method according to any of the preceding claims, wherein the determination of the flow velocity is based on one confocal volume for a desired velocity range up to 0,1 m/s, wherein preferably the determination of the flow velocity is based on two adjacent confocal volumes for a desired velocity range from >0,1 m/s to 50 m/s, wherein prefereably the particles are organic particles, in particular plankton and/or algae or derivatives of algae and/or pigments, or inorganic particles, and wherein preferably the confocal volumes have a size in the range of $10^{-15}$ (Femto) to $10^{-9}$ (Nano) liters.

9. Method according to any of the preceding claims, wherein a distance between a confocal volume and the surface of the immersed object is chosen in the range from zero to few centimeters, wherein preferably the determined flow is used to determine the velocity of the immersed object, when the immersed object is propelled within the fluid by an additional force, in particular wind force and/or motor force, and wherein preferably the light which is focused on the at least one confocal volume is a laser light.

10. Object, preferably boat, immersed in water, in particular seawater or freshwater or brackwater, **characterized by** comprising a measurement device adapted to carry out the method according to any of claims 1 to 9, wherein the measurement device comprises:

- at least one light source, preferably laser light source, which is adapted to deliver a light beam for irradiation of at least one confocal volume;
- at least one lens arrangement adapted to define the confocal volume in the fluid; and
- at least one lens arrangement adapted to image the confocal volume to a photo detector, preferably photo diode,

wherein the at least one lens arrangement of the measurement device for defining the confocal volume in the fluid is arranged on or in the surface of the immersed object, preferably boat, in particular on or in its hull, keel or rudder, such that the confocal volume can be produced close to the immersed surface of the object, preferably boat.

11. Object according to claim 10, wherein the lens arrangement for defining the confocal volume and the lens arrangement for imaging are configured by the same lens or the same lenses, preferably the boat further comprising at least one first glass fiber cable segment, which is arranged in the optical path between the light source and the lens arrangement for defining the confocal volume.

12. Object according to claim 11, wherein the at least one first glass fiber cable segment is further optically connected to the lens arrangement for imaging the confocal volume, in particular for collecting the emission or reflection or scattering from the confocal volume, preferably the boat further comprising at least one second glass fiber cable segment, which is arranged in the optical path from the lens arrangement to the photo detector, and preferably further comprising a dichroic beam splitter, which is arranged between the lens arrangement and the light source and between the lens arrangement and the photo detector, and wherein preferably the first glass fiber cable segment is optically connected between the dichroic beam splitter and the lens arrangement, and the second glass fiber cable segment is optically connected between the dichroic beam splitter and the photo diode.

13. Object according to any of claims 10 to 12, wherein the photo detector is an avalanche photo diode, and wherein preferably the device comprises two lens arrangements for defining two confocal volumes in the fluid and two lens arrangements for imaging both confocal volumes to a photo detector.

**Patentansprüche**

1. Verfahren zum Bestimmen der Strömung von Wasser, insbesondere von Meerwasser oder Süßwasser oder Brackwasser, nahe einer Fläche eines in das Wasser eingetauchten Objekts,
**gekennzeichnet durch** ein Analysieren wenigstens,eines konfokalen Mess-Volumens in dem Wasser, und **dadurch**, dass es die folgenden Schritte umfasst:

Fokussieren von Licht in das wenigstens eine konfokale Volumen innerhalb des Wassers;
Detektieren und Bestimmen der Luminiszenz von wenigstens einem Partikel, welches in dem konfokalen Volumen enthalten ist, welche mittels Floureszenz-Korrelationsspektroskopie FCS gemessen wird; und
Bestimmen der Strömungsgeschwindigkeit des Wassers entlang des in Wasser eingetauchten Objekts, vorzugsweise entlang Teilen eines Boots, insbesondere seines Rumpfs, Kiels oder Ruders, auf Grundlage der Bestimmung der Luminiszenz unter Verwendung einer Korrelationsfunktion, insbesondere einer Autokorrelationsfunktion oder einer Kreuzkorrelationsfunktion.

2. Verfahren nach Anspruch 1, umfassend die folgenden Schritte:

Anregen des wenigstens einen Luminiszenz-Partikels in dem wenigstens einen konfokalen Volumen,
Abbilden des konfokalen Volumens an Detektions-Mitteln zum Detektieren der Intensitätsfluktuation einer Luminiszenz-Emission des Partikels,
Aufnehmen der Luminiszenz-Intensität durch die Detektionsmittel,

Bestimmen der Strömungsgeschwindigkeit auf Grundlage einer Korrelationsfunktion, insbesondere einer Autokorrelationsfunktion oder einer Kreuzkorrelationsfunktion, abhängig von der aufgenommenen Luminiszenz-Intensität.

3. Verfahren zum Bestimmen der Strömung von Wasser, insbesondere von Meerwasser oder Süßwasser oder Brackwasser, nahe einer Fläche eines in das Wasser eingetauchten Objekts, **gekennzeichnet durch** ein Analysieren wenigstens eines konfokalen Mess-Volumens in dem Wasser, und **dadurch**, dass es die folgenden Schritte umfasst,:

Fokussieren von Licht in das wenigstens eine konfokale Volumen innerhalb des Wassers;
Detektieren und Bestimmen der Reflexion von wenigstens einem Partikel in dem konfokalen Volumen, umfassend die folgenden Schritte:

Bestrahlen des wenigstens einen Partikels in dem wenigstens einen konfokalen Volumen,
Abbilden des konfokalen Volumens an Detektions-Mitteln zum Detektieren der Reflexions-Intensität von reflektiertem Licht von dem Partikel, Aufnehmen der Reflexions-Intensität **durch** die Detektions-Mittel, Bestimmen der Strömungsgeschwindigkeit des Wassers entlang des in Wasser eingetauchten Objekts, vorzugsweise entlang Teilen eines Boots, insbesondere seines Rumpfs, Kiels oder Ruders, auf Grundlage einer Korrelationsfunktion, insbesondere einer Autokorrelationsfunktion oder einer Kreuzkorrelationsfunktion, abhängig von der aufgenommenen Reflexions-Intensität.

4. Verfahren nach Anspruch 1 oder 2, wobei die Strömung und ihre Richtung aus korrelierten Luminiszenz-Intensitäten bestimmt werden, welche von wenigstens einem Partikel in jedem von zwei benachbarten konfokalen Volumen emittiert werden.

5. Verfahren nach Anspruch 3, wobei die Strömung und ihre Richtung aus korrelierten Reflexions-Intensitäten bestimmt werden, welche von wenigstens einem Partikel in jedem von zwei benachbarten konfokalen Volumen emittiert werden.

6. Verfahren nach Anspruch 4 oder 5, wobei ein Abstand zwischen den benachbarten konfokalen Volumen abhängig von dem Geschwindigkeitsbereich von Interesse gewählt ist, wobei der Abstand von etwa 100 $\mu$m bis etwa 10000 $\mu$m beträgt.

7. Verfahren nach einem der vorhergehenden Ansprüche, wobei der wenigstens eine Partikel natürlich in dem Wasser enthalten ist oder/und künstlich in das Wasser gegeben ist, wobei vorzugsweise der künstliche Partikel eine Kombination von wenigstens zwei Partikeln umfasst, welche verschiedene Farben emittieren, und wobei vorzugsweise die Strömung durch eine duale Farb-Kreuzkorrelation oder durch eine Kreuzkorrelation höherer Ordnung bestimmt wird.

8. Verfahren nach einem der vorhergehenden Ansprüche, wobei die Bestimmung der Strömungsgeschwindigkeit auf einem konfokalen Volumen für einen Soll-Geschwindigkeitsbereich bis zu 0,1 m/s basiert, wobei vorzugsweise die Bestimmung der Strömungsgeschwindigkeit auf zwei benachbarten konfokalen Volumen für einen Soll-Geschwindigkeitsbereich von >0,1 m/s bis 50 m/s basiert, wobei vorzugsweise die Partikel organische Partikel, insbesondere Plankton oder/und Algen oder Abkömmlinge von Algen oder/und Pigmenten, oder anorganische Partikel sind, und wobei vorzugsweise die konfokalen Volumen eine Größe in dem Bereich von $10^{-15}$ (Femto) bis $10^{-9}$ (Nano) Liter aufweisen.

9. Verfahren nach einem der vorhergehenden Ansprüche, wobei ein Abstand zwischen einem konfokalen Volumen und der Fläche des eingetauchten Objekts in dem Bereich von Null bis einige Zentimeter gewählt wird, wobei vorzugsweise die bestimmte Strömung verwendet wird, um die Geschwindigkeit des eingetauchten Objekts zu bestimmen, wenn das eingetauchte Objekt innerhalb des Fluids durch eine zusätzliche Kraft, insbesondere Windkraft oder/und Motorkraft, angetrieben wird, und wobei vorzugsweise das auf das wenigstens eine konfokale Volumen fokussierte Licht Laserlicht ist.

10. Objekt, vorzugsweise Boot, welches in Wasser eingetaucht ist, vorzugsweise in Meerwasser oder Süßwasser oder Brackwasser, **dadurch gekennzeichnet, dass** es eine Messvorrichtung umfasst, welche dazu eingerichtet ist, das Verfahren nach einem der Ansprüche 1 bis 9 durchzuführen, wobei die Messvorrichtung umfasst:

- wenigstens eine Lichtquelle, vorzugsweise Laserlichtquelle, welche dazu eingerichtet ist, einen Lichtstrahl zum Bestrahlen von wenigstens einem konfokalen Volumen zu liefern;
- wenigstens eine Linsenanordnung, welche dazu eingerichtet ist, das konfokale Volumen in dem Fluid zu definieren; und
- wenigstens eine Linsenanordnung, welche dazu eingerichtet ist, das konfokale Volumen auf einen Fotodetektor, vorzugsweise eine Fotodiode, abzubilden,

wobei die wenigstens eine Linsenanordnung der Messvorrichtung zum Definieren des konfokalen Volumens in dem Fluid an oder in der Fläche des eingetauchten Objekts, vorzugsweise Boots, angeordnet ist, insbesondere an oder in seinem Rumpf, Kiel oder Ruder, so dass das konfokale Volumen nahe der eingetauchten Fläche des Objekts, vorzugsweise Boots, erzeugt werden kann.

11. Objekt nach Anspruch 10, wobei die Linsenanordnung zum Definieren des konfokalen Volumens und die Linsenanordnung zum Abbilden durch dieselbe Linse oder dieselben Linsen eingerichtet sind, wobei das Boot ferner vorzugsweise wenigstens ein erstes Glasfaserkabel-Segment umfasst, welches in dem optischen Pfad zwischen der Lichtquelle und der Linsenanordnung zum Definieren des konfokalen Volumens angeordnet ist.

12. Objekt nach Anspruch 11, wobei das wenigstens eine Glasfaserkabel-Segment ferner optisch mit der Linsenanordnung zum Abbilden des konfokalen Volumens verbunden ist, insbesondere zum Sammeln der Emission oder Reflexion oder Streuung von dem konfokalen Volumen, wobei das Boot vorzugsweise ferner wenigstens ein zweites Glasfaserkabel-Segment umfasst, welches in dem optischen Pfad von der Linsenanordnung zu dem Fotodetektor angeordnet ist, und vorzugsweise ferner einen dichroitischen Strahlteiler umfasst, welcher zwischen der Linsenanordnung und der Lichtquelle und zwischen der Linsenanordnung und dem Fotodetektor angeordnet ist, und wobei vorzugsweise das erste Glasfaserkabel-Segment optisch zwischen dem dichroitischen Strahlteiler und der Linsenanordnung verbunden ist, und das zweite Glasfaserkabel-Segment optisch zwischen dem dichroitischen Strahlteiler und der Fotodiode verbunden ist.

13. Objekt nach einem der Ansprüche 10 bis 12, wobei der Fotodetektor eine Lawinenfotodiode ist, und wobei vorzugsweise die Vorrichtung zwei Linsenanordnungen zum Definieren von zwei konfokalen Volumen in dem Fluid und zwei Linsenanordnungen zum Abbilden beider konfokaler Volumen auf einem Fotodetektor umfasst.

## Revendications

1. Procédé pour déterminer l'écoulement d'eau, en particulier d'eau de mer, d'eau douce ou d'eau saumâtre, proche d'une surface d'un objet immergé dans l'eau, **caractérisé par** une analyse d'au moins un volume de mesure confocal dans l'eau, et en ce qu'il comprend les étapes suivantes:

concentrer une lumière dans ledit au moins un volume confocal à l'intérieur de l'eau;
détecter et déterminer la luminescence d'au moins une particule présente dans le volume confocal, qui est mesurée par spectrométrie de corrélation de fluorescence (FCS); et
déterminer la vitesse d'écoulement de l'eau le long de l'objet immergé dans l'eau, de préférence le long de parties d'un bateau, en particulier sa coque, sa quille ou son safran, sur la base de la détermination de la luminescence en utilisant une fonction de corrélation, en particulier une fonction d'auto-corrélation ou une fonction de corrélation transversale.

2. Procédé selon la revendication 1, dans lequel les étapes suivantes sont exécutées:

exciter ladite au moins une particule luminescente dans ledit au moins un volume confocal, imager le volume confocal sur des moyens de détection afin de détecter la fluctuation d'intensité d'une émission luminescente de la particule;
enregistrer l'intensité de luminescence par les moyens de détection;
déterminer la vitesse d'écoulement sur la base d'une fonction de corrélation, en particulier une fonction d'auto-corrélation ou une fonction de corrélation transversale, en fonction de l'intensité de luminescence enregistrée.

3. Procédé pour déterminer l'écoulement d'eau, en particulier d'eau de mer, d'eau douce ou d'eau saumâtre, proche d'une surface d'un objet immergé dans l'eau, **caractérisé par** une analyse d'au moins un volume de mesure confocal dans l'eau, et en ce qu'il comprend les étapes suivantes:

concentrer une lumière dans ledit au moins un volume confocal à l'intérieur de l'eau;

détecter et déterminer la réflexion d'au moins une particule dans le volume confocal, dans lequel les étapes suivantes sont exécutées:

irradier ladite au moins une particule dans ledit au moins un volume confocal;

imager le volume confocal sur des moyens de détection afin de détecter l'intensité de réflexion de la lumière réfléchie par la particule;

enregistrer l'intensité de réflexion par les moyens de détection;

déterminer la vitesse d'écoulement de l'eau le long de l'objet immergé dans l'eau, de préférence le long de parties d'un bateau, en particulier sa coque, sa quille ou son safran, sur la base d'une fonction de corrélation, en particulier une fonction d'auto-corrélation ou une fonction de corrélation transversale, en fonction de l'intensité de réflexion enregistrée.

4. Procédé selon la revendication 1 ou 2, dans lequel l'écoulement et sa direction sont évalués à partir des intensités de luminescence corrélées émises par au moins une particule dans chacun de deux volumes confocaux adjacents.

5. Procédé selon la revendication 3, dans lequel l'écoulement et sa direction sont évalués à partir d'intensités de réflexion corrélées émises par au moins une particule dans chacun de deux volumes confocaux adjacents.

6. Procédé selon la revendication 4 ou 5, dans lequel une distance entre les volumes confocaux adjacents est choisie en fonction de la plage de vitesse concernée, la distance étant comprise entre environ 100 $\mu$m et environ 10000 $\mu$m.

7. Procédé selon l'une quelconque des revendications précédentes, dans lequel ladite au moins une particule est naturellement contenue dans et/ou placée par l'homme dans l'eau, dans lequel de préférence la particule anthropique comprend une combinaison d'au moins deux particules qui émettent des couleurs différentes, et dans lequel de préférence l'écoulement est déterminé par une corrélation transversale à deux couleurs ou par une corrélation transversale d'un ordre plus élevé.

8. Procédé selon l'une quelconque des revendications précédentes, dans lequel la détermination de la vitesse d'écoulement est basée sur un volume confocal pour une plage de vitesse souhaitée jusqu'à 0,1 m/s, dans lequel de préférence la détermination de la vitesse d'écoulement est basée sur deux volumes confocaux adjacents pour une plage de vitesse souhaitée de > 0,1 m/s à 50 m/s, dans lequel de préférence les particules sont des particules organiques, en particulier du plancton et/ou des algues ou des dérivés d'algues et/ou de pigments, ou des particules inorganiques, et dans lequel de préférence les volumes confocaux présentent une taille dans la gamme de $10^{-15}$ (Femto) à $10^{-9}$ (Nano) litres.

9. Procédé selon l'une quelconque des revendications précédentes, dans lequel une distance entre un volume confocal et la surface de l'objet immergé est choisie dans la gamme de zéro à quelques centimètres, dans lequel de préférence l'écoulement déterminé est utilisé pour déterminer la vitesse de l'objet immergé, lorsque l'objet immergé est propulsé à l'intérieur du liquide par une force supplémentaire, en particulier la force du vent et/ou une force motrice, et dans lequel de préférence la lumière qui est concentrée sur ledit au moins un volume confocal est une lumière laser.

10. Objet, de préférence bateau, immergé dans l'eau, en particulier l'eau de mer, l'eau douce ou l'eau saumâtre, **caractérisé en ce qu'**il comprend un dispositif de mesure adapté pour exécuter le procédé selon l'une quelconque des revendications 1 à 9, dans lequel le dispositif de mesure comprend:

- au moins une source de lumière, de préférence une source de lumière laser, qui est adaptée pour délivrer un rayon de lumière pour irradier au moins un volume confocal;

- au moins un arrangement de lentille adapté pour définir le volume confocal dans le liquide; et

- au moins un arrangement de lentille adapté pour imager le volume confocal sur un photodétecteur, de préférence une photodiode,

dans lequel ledit au moins un arrangement de lentille du dispositif de mesure pour définir le volume confocal dans le liquide est agencé sur ou dans la surface de l'objet immergé, de préférence un bateau, en particulier sur ou dans sa coque, sa quille ou son safran, de telle sorte que le volume confocal puisse être produit à proximité de la surface immergée de l'objet, de préférence un bateau.

11. Objet selon la revendication 10, dans lequel l'arrangement de lentille pour définir le volume confocal et l'arrangement de lentille pour l'imagerie sont configurés par la même lentille ou les mêmes lentilles, de préférence le bateau comprenant en outre au moins un premier segment de câble à fibre de verre, qui est agencé dans le chemin optique entre la source de lumière et l'arrangement de lentille pour définir le volume confocal.

12. Objet selon la revendication 11, dans lequel ledit au moins un premier segment de câble à fibre de verre est en outre optiquement connecté à l'arrangement de lentille pour imager le volume confocal, en particulier pour collecter l'émission ou la réflexion ou la diffusion à partir du volume confocal, de préférence le bateau comprenant en outre au moins un deuxième segment de câble à fibre de verre qui est agencé dans le chemin optique à partir de l'arrangement de lentille jusqu'au photodétecteur, et de préférence comprenant en outre un séparateur de faisceau dichroïque, qui est agencé entre l'arrangement de lentille et la source de lumière et entre l'arrangement de lentille et le photodétecteur, et dans lequel de préférence le premier segment de câble à fibre de verre est optiquement connecté entre le séparateur de faisceau dichroïque et l'arrangement de lentille, et le deuxième segment de câble à fibre de verre est optiquement connecté entre le séparateur de faisceau dichroïque et la photodiode.

13. Objet selon l'une quelconque des revendications 10 à 12, dans lequel le photodétecteur est une photodiode à avalanche, et dans lequel de préférence le dispositif comprend deux arrangements de lentille pour définir deux volumes confocaux dans le liquide et deux arrangements de lentille pour imager les deux volumes confocaux sur un photodétecteur.

Fig. 1

Fig. 2

Fig. 3

Fig. 4

Fig. 5

Fig. 6

Y Axis Title / X Axis Title (A)

Fig. 7

Fig. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 19718917

- US 3472593 A

**Non-patent literature cited in the description**

- **MAGDE,D ; ELSON,W. ; WEBB.W.W.** Flow analysis by FCS. *Biopolymers,* 1977
- **RIGLER,R ; METS,U. ; WIDENGREN,J. ; KASK,P.** Fluorescence correlation spectroscopy with high count rate and low background: Analysis of translational diffusion. *Eur. Biophys J,* 1993, vol. 22, 169-175
- **BRINKMEIER,M ; RIGLER,R.** Flow Analysis by means of Fluorescence Correlation Spectroscopy. *Exp.Techn.Phys.,* 1995, vol. 41, 205-210

- **BRINKMEIER,M.** Fluoreszenz Korrelations Spektrosokopie in Mikrostrukturen. *Dissertation Universität Braunschweig,* 1996
- Fluorescence Correlation Spectroscopy. **RIGLER,R. ; ELSON,E.** Theory and Application. Springer-Verlag, 2000
- **GÖSCH,M. ; BLOM, H. ; HOLM, J. ; HEINO, T. ; RIGLER,R.** Hydrodynamic Flow Profiling in Microchannel structures by Single Molecule Fluorescence Correlation Spectroscopy. *Anal.Chem.,* 2000, vol. 72, 3260-3265